(19) Europäisches Patentamt
European Patent Office
Office européen des brevets

(11) Veröffentlichungsnummer: **0 285 021**
**A2**

(12) **EUROPÄISCHE PATENTANMELDUNG**

(21) Anmeldenummer: **88104828.4**

(22) Anmeldetag: **25.03.88**

(51) Int. Cl.⁴: **C08G 61/12**, H01B 1/12, C08G 85/00

(30) Priorität: **31.03.87 DE 3710657**

(43) Veröffentlichungstag der Anmeldung: **05.10.88 Patentblatt 88/40**

(84) Benannte Vertragsstaaten: **AT BE CH DE FR GB IT LI NL SE**

(71) Anmelder: **WACKER-CHEMIE GMBH**
**Prinzregentenstrasse 22**
**D-8000 München 22(DE)**

(72) Erfinder: **Bräunling, Hermann, Dr.**
**Marktler Strasse 82**
**D-8263 Burghausen(DE)**
Erfinder: **Becker, Richard, Dr.**
**Anton-Überreiter-Strasse 17**
**D-8261 Emmerting(DE)**

(54) **Basische Polypyrrylenmethine und deren Salze.**

(57) Die Erfindung betrifft Polymere mit konjugierten Doppelbindungen aus gegebenenfalls substituierten heterocyclischen Fünfringen mit Stickstoffatomen als einzigen Heteroatomen im Ring, wobei die Fünfringe jeweils paarweise über ein gegebenenfalls substituiertes Kohlenstoffatom als Brückenglied miteinander verbunden sind, die Polymere mindestens fünf dieser Fünfringe und von 0 bis 50 %, bezogen auf das Gewicht dieser Polymere, Dotierungsmittel enthalten und/oder elektrochemisch dotiert sind.

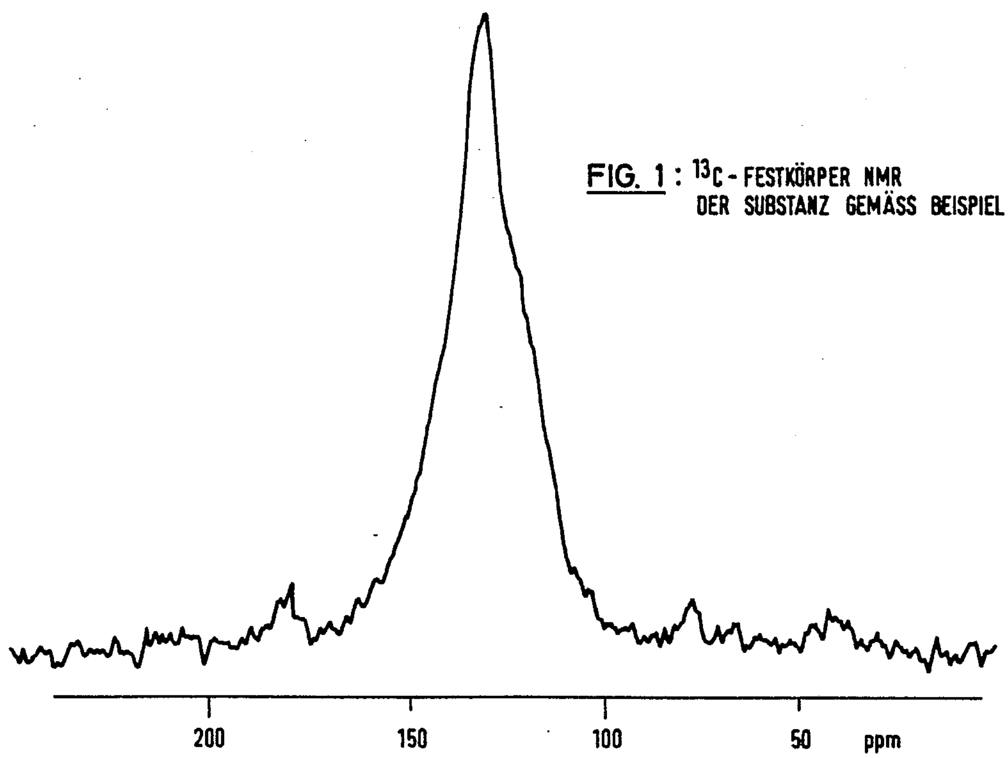


FIG. 1: $^{13}$C-FESTKÖRPER NMR DER SUBSTANZ GEMÄSS BEISPIEL 6

EP 0 285 021 A2

## Basische Polypyrrylenmethine und deren Salze

Die Erfindung betrifft Polypyrrylenmethine, deren durch Quarternisierung von mindestens einem der basischen Pyrrolstickstoffatome erhältlichen Salze sowie ein Verfahren zur Herstellung der genannten Polymere.

Poly(hetero)arylenmethine sind aus DE-A 35 31 600 (offengelegt am 5. März 1987, H. Bräunling et al., Wacker-Chemie GmbH) bekannt. Die dort beschriebene Synthese beruht auf der Reaktion von (Hetero-) Aromaten mit Verbindungen der Formel $X\text{-}CH_2\text{-}R''\text{-}CX_2\text{-}R$, worin R beispielsweise ein Wasserstoffatom, X beispielsweise ein Halogenatom, $X_2$ zwei Halogenatome oder ein Carbonyl-Sauerstoffatom und R″ein (Hetero-) Arylidenrest bedeuten können. Polypyrrylenmethine im speziellen sind dort nicht ausdrücklich erwähnt.

Aufgabe der Erfindung war es, neue Polymere mit konjugierten Doppelbindungen zur Verfügung zu stellen. Eine weitere Aufgabe der vorliegenden Erfindung war es, ein neues Verfahren zur Herstellung von Polymeren mit konjugierten Doppelbindungen zu entwickeln. Die vorstehend geschilderten Aufgaben werden durch die vorliegende Erfindung dadurch gelöst, daß Polymere mit konjugierten Doppelbindungen hergestellt wurden, aufgebaut aus gegebenenfalls ringsubstituierten heterocyclischen Fünfringen mit jeweils einem gegebenenfalls substituierten Stickstoffatom als einzigem Heteroatom im Ring, dadurch gekennzeichnet, daß die Fünfringe jeweils paarweise über ein gegebenenfalls substituiertes Kohlenstoffatom als Brückenglied miteinander verbunden sind, die Polymere mindestens fünf dieser Fünfringe und 0 bis 50 %, bezogen auf das Gewicht dieser Polymere, Dotierungsmittel enthalten und/oder elektrochemisch dotiert sind.

Bei den erfindungsgemäßen Polymeren handelt es sich vorzugsweise um solche, die Einheiten der Formel (I) enthalten

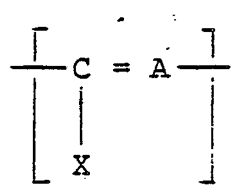

(I),

worin die Reste

C Kohlenstoffatome und die Reste

A gleiche oder verschiedene Reste der Formel (II) sind:

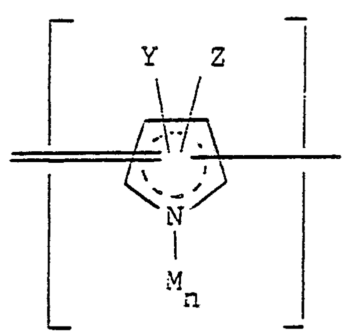

(II),

wobei in den obigen Formeln (I) und (II)

X,Y und Z unabhängig voneinander gleiche oder verschiedene einwertige Reste bedeuten, nämlich Wasserstoffatome, $C_1$-bis $C_{18}$ -Alkylreste oder gegebenenfalls durch Halogen-Nitro-, $C_1$-$C_4$ Alkyl, Aryl substituierte Phenylreste und

Y und Z, welche, wie aus Formel (II) ersichtlich, jeweils an die nicht durch Gruppen der Formel C-X substituierten Kohlenstoffatome des Heterocyclus gebunden sind, können zusätzlich zu den oben genannten Bedeutungen auch noch solche der Formel -COOR haben, worin R für ein Wasserstoffatom, eine Phenyl-oder $C_1$-bis $C_{18}$-Alkylgruppe steht,

M steht jeweils für Wasserstoff, ein Metallatom, Metallion, einen Metallkomplex, eine Lewis-Säure, einen $C_1$-bis $C_{18}$-Alkylrest oder einen Phenylrest,

n steht für die Zahl 0 oder 1, mit der Maßgabe, daß wenn
n 0 bedeutet, die entsprechende Einheit der Formel (I) ungeladen ist und wenn
n 1 bedeutet, diese Einheit eine positive Ladung trägt,
und der gestrichelte Kreis innerhalb des Fünfrings in Formel (II) für zwei bindende Pi-Elektronenpaare im Heterocyclus steht.

Beispiele für Reste X, Y und Z sind Wasserstoffatome; Alkylreste, wie Methyl-, Ethyl-, n-Propyl-, iso-Propyl-, n-, sec-und t-Butylreste, n-, sec-, t-und neo-Pentylreste, Hexylreste, wie der n-Hexylrest, Heptylreste, Oktylreste, wie der n-Oktyl-und der 2,2,4-Trimethylpentylrest, Nonylreste, wie der n-Nonylrest, Decylreste, wie der n-Decylrest, Undecyl-, Dodecyl-, Tridecyl-, Tetradecyl-, Pentadecyl-, Hexadecyl-, Heptadecyl-und Oktadecylreste; Phenylreste; substituierte Phenylreste, wie o-, m-, und p-Tolylreste, Xylylreste, Biphenylylreste,o-, m-, p-Chlorphenylreste, Nitrophenylreste und ähnliches mehr.

Weitere Beispiele für Reste Y und Z sind Reste der Formel -COOR, wobei Beispiele für Reste R Wasserstoffatome, Phenylreste und die als Beispiele für Alkylreste X, Y und Z genannten Reste.

Beispiele für Reste M sind das Wasserstoffatom, Phenylreste, als Beispiele für Reste X, Y und Z genannte $C_1$-bis $C_{18}$-Alkylreste, Lewis-Säuren, wie $BF_3$, $AlCl_3$, $SnCl_4$, $BBr_3$, $BF_3$-Diethyletherat, $FeCl_3$, $ZnCl_2$, Eisen, Metallkationen der Übergangselemente und Komplexe von Metallen und Metallkationen der Übergangsmetalle mit bekannten Komplexbildnern. Beispiele für solche Metalle und Metallkationen sind Ti, Zr, V, Cr, Mo, W, Mn, Fe, Co, Ni, Cu, Zn, Ag, Au, Cd, Hg, Rh, Os, Ir, Pt und deren Kationen. Bekannte Komplexbildner sind Ethylendiamintetraessigsäure und deren Salze, Nitrilotriessigsäure und deren Salze, organische Amine, Cyanid, Ammoniak und weitere anorganische Anionen wie Chlorid und Sulfat.

Vorzugsweise sind die Reste
X Wasserstoffatome, $C_1$-bis $C_8$-Alkylreste oder Phenylreste;
Y und Z Wasserstoffatome, $C_1$-bis $C_8$ -Alkylreste, Phenylreste oder Reste der Formel -COOR, wobei R ein $C_1$-bis $C_8$-Alkylrest oder Phenylrest ist;
M Wasserstoffatome, $C_1$-bis $C_{10}$-Alkylreste, Phenylreste, Lewis-Säuren und anorganische Salze der Übergangsmetalle.

Insbesondere sind
X Wasserstoffatome, $C_1$-bis $C_4$-Alkylreste oder Phenylreste;
Y und Z Wasserstoffatome, $C_1$-bis $C_4$-Alkylreste oder Reste der Formel -COOR, wobei R ein $C_1$-bis $C_4$-Alkylrest ist;
M Wasserstoffatome, $C_1$-bis $C_{14}$-Alkylreste, Phenylreste, Lewis Säuren und anorganische Salze von Ti, V, Cr, Mn, Fe, Co, Ni, Cu und/oder Zn.

Falls in obiger Formel (II) n den Wert 1 hat, enthält das Polymer Gegenionen, um seine elektrische Neutralität zu wahren. Bei diesen Gegenionen handelt es sich um Anionen, beispielsweise anorganische Anionen, wie Fluorid, Chlorid, Bromid, Jodid, Sulfat, Hydrogensulfat, Phosphat, Hydrogenphosphat, Dihydrogenphosphat, Nitrat, Perchlorat und Tetrafluoroborat, organische Anionen wie Acetat, Trifluoracetat, Trichloracetat, Fluormethansulfonat, p-Toluolsulfonat, Trifluormethansulfonat und dergleichen mehr.

Die erfindungsgemäßen Polymere, insbesondere diejenigen, die Einheiten der Formel (I) besitzen, sind erhältlich durch Polykondensation von Molekülen der Formel (III)

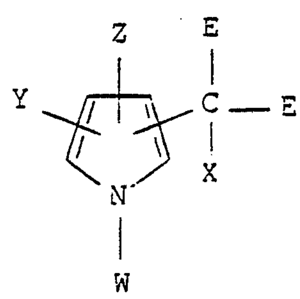
(III),

worin X, Y und Z die für die Formeln (I) und (II) angegebenen Bedeutungen haben, der Rest der Formel $-CXE_2$ in 2-,3-,4-oder 5-Position am Pyrrolring sitzt,
W ein Wasserstoffatom, ein $C_1$-bis $C_{18}$-Alkylrest oder einen Phenylrest bedeutet
und
E gleiche oder verschiedene einwertige Reste, nämlich Halogenatome, insbesondere Chlor-oder Bromatome, $C_1$-bis $C_6$-Alkoxyreste, $C_1$-bis $C_8$-Alkylsulfonat-oder Arylsulfonatreste bedeuten oder beide Reste E für das Sauerstoffatom einer Carbonylgruppe stehen.

Beispiele für $C_1$-bis $C_{18}$-Alkylreste W sind die als Beispiele für $C_1$-bis $C_{18}$-Alkylreste X,Y und Z

genannten Reste.

Die Polykondensation wird vorzugsweise in Gegenwart eines Kondensationsmittels, beispielsweise aus der Gruppe der Säurechloride, Säureanhydride und starken Säuren und hygroskopen Verbindungen durchgeführt. Beispiele für hygroskope Verbindungen sind $CaCl_2$, KOH, $CuSO_4$, $Co(NO_3)_2$ u.ä.m. jeweils in getrockneter Form ohne Kristallwasser. Beispiele für solche Säurechloride sind $SOCl_2$, $POCl_3$, $PCl_5$ und p-Toluolsulfonsäurechlorid; Beispiele für solche Säureanhydride sind Acetanhydrid, Trifluormethansulfonsäureanhydrid, $P_4O_{10}$, $SO_3$ und Trifluoressigsäureanhydrid. Beispiele für solche starken Säuren sind p-Toluolsulfonsäure, Schwefelsäure, $C_1$-bis $C_8$-Alkyl-oder Arylsulfonsäuren, Fluorsulfonsäure und Chlorsulfonsäure. Vorzugsweise wird das Kondensationsmittel nach der Kondensation entfernt, insbesondere destillativ.

Die Polykondensation von Molekülen der Formel (III) kann in Abwesenheit von jeglichem Lösungsmittel, sie kann auch in Gegenwart eines inerten Lösungsmittels durchgeführt werden. Beispiele für solche inerten Lösungsmittel sind Dichlormethan, Trichlormethan, Tetrachlormethan, Tetrachlorethylen, 1,2-Dichlorethan, Schwefelkohlenstoff, Nitrobenzol, Diethylether und ähnliche mehr. Falls kein Lösungsmittel verwendet wird, so wird ein Kondensationsmittel, falls verwendet, vorzugsweise gasförmig auf die zu kondensierende Verbindung der Formel (III) aufgebracht.

Falls ein Polymer dargestellt werden soll, das Einheiten der Formel (II) enthält, wobei n den Wert 1 besitzt, kann man von einer Verbindung der Formel (III) ausgehen, in der W ein Wasserstoffatom bedeutet und das entsprechend dargestellte Polymer wie nachstehend geschildert nachbehandeln.

Diese Nachbehandlung ist nicht notwendig, falls der Rest W in Formel (III) dem Rest $M_n$ in Formel (II) entspricht, sollen beispielsweise Polymere der Formel (I) mit n = 1 und M = Wasserstoff, $C_1$-bis $C_{18}$-Alkyl oder Phenyl hergestellt werden, so wird direkt von Verbindungen der Formel (III) ausgegangen, in denen der Rest W dem gewünschten Rest M entspricht.

Die Nachbehandlung erfolgt durch Entfernung von Resten von Kondensationsmittel und dessen Reaktionsprodukten, falls Kondensationsmittel verwendet wurde, und Quarternisierung des Stickstoffatoms des Heterocyclus. Reste von Kondensationsmittel und dessen Reaktionsprodukte, die nach der oben erwähnten Destillation noch zugegen sind, können entfernt werden, indem man das Polymer mit einem polaren Lösungsmittel und insbesondere einer Base behandelt. Als polares Lösungsmittel ist Wasser bevorzugt. Schon relativ schwache Basen, wie Ammoniak, primäre, sekundäre und tertiäre organische Amine, Carbonat und dergleichen unterstützen das Auswaschen von Kondensationsmitteln und deren Reaktionsprodukte erheblich, was sich anhand von Elementaranalysen der Polymere vor und nach der Behandlung überprüfen ließ. Anschließend wird das Stickstoffatom quarternisiert, um den Rest M gemäß Formel (II) einzuführen dies gelingt durch Umsetzung des Polymeren mit Brönstedt-oder Lewis-Säuren, Metallen, Metallionen, Metallkomplexen und/oder $C_1$-bis $C_{18}$-Alkylierungs-und/oder Phenylierungsmitteln. Beispiele für Brönstedt-Säuren sind HCl, $H_2SO_4$, $HClO_4$, $ClSO_3H$, HBr, $H_2F_2$, HJ, $H_3PO_4$, $HNO_3$, $F_3CCOOH$ und dergleichen mehr, deren säure Salze, deren säure Kondensate, wie Pyrophosphorsäure, Tetrafluoroborsäure, Trichloressigsäure, p-Toluolsulfonsäure, Trifluormethansulfonsäure etc. Beispiele für Lewis-Säuren, Metalle, Metallionen und Metallkomplexe sind die bereits als Beispiele für M genannten Atome, Ionen und Moleküle. Beispiele für Alkylierungsmittel sind Methyljodid, Dimethylsulfat, Trifluormethansulfonsäuremethylester, Diethylsulfat und die übrigen Jodide, Bromide, Chloride und Schwefelsäureester der als Beispiele für X, Y und Z oben aufgeführten $C_1$-bis $C_{18}$-Alkylreste.

Alle vorstehend aufgeführten Reaktionsteilnehmer und Hilfschemikalien können einzeln oder im Gemisch eingesetzt werden. Es können beispielsweise Gemische von Verbindungen der Formel (III) eingesetzt werden, Gemische von Kondensationsmitteln, von Lösungsmitteln, von Mitteln zur Quarternisierung der Stickstoffatome im Heterocyclus (im folgenden "Quarternisierungsmittel" genannt) eingesetzt werden.

Die Kondensation von Verbindungen der Formel (III) kann bei Drücken weit über oder weit unter 0,1 MPa (abs.) durchgeführt werden. Bevorzugt sind Drücke von 0,09 MPa (abs.) bis 0,11 MPa (abs.), insbesondere der Druck der umgebenden Atmosphäre, also etwa 0,101 MPa (abs.).

Das Molverhältnis von Kondensationsmittel zu Verbindung der Formel (III) beträgt vorzugsweise 0 bis 100, insbesondere 0,1 bis 50, speziell 0,2 bis 35; im allgemeinen reichen 0,5 bis 2 Mol Kondensationsmittel pro Mol Verbindung der Formel (III) aus, um die Reaktion hinreichend zu beschleunigen. Die Kondensation wird vorzugsweise bei Temperaturen von 0 bis 250°C durchgeführt, insbesondere, in Anwesenheit von starken Kondensationsmitteln, bei Temperaturen von 15 bis 100°C.

Nach der Reaktion werden Kondensationsmittel, falls verwendet, und Lösungsmittel, falls verwendet, vorzugsweise destillativ abgetrennt; insbesondere wird das Polymer vor der Destillation, falls es als Pulver erhalten wird, vom Großteil der Lösungsmittel und/oder Kondensationsmittel durch Filtration getrennt. Vorzugsweise wird bei Unterdruck destilliert, insbesondere bei Drücken unter 1 hPa, speziell bei Drücken unter 1Pa (abs.), wobei in letzterem Fall im allgemeinen Temperaturen bis 150°C für die Destillation

genügen.

Die Menge an Quarternisierungsmittel, falls verwendet, hängt davon ab, welchen Anteil der im Polymer enthaltenen, im Heterocyclus gebundenen Stickstoffatome quarternisiert werden sollen.

Die oben geschilderten Polymere können, sofern dies gewünscht wird, zusätzlich elektrochemisch und/oder durch Dotierungsmittel dotiert werden. Je nach Wahl der Dotierungsmittel lassen sich die Leitfähigkeiten der erfindungsgemäßen Polymere in weiten Grenzen variieren. Beispiele für Dotierungsmittel sind Alkalimetalle, wie Natrium oder Kalium; Protonensäuren wie $H_2SO_4$, $HClO_4$, $H_2Cr_2O_7$, HJ und $HNO_3$; Lewis-Säuren wie $SbCl_5$, $AsCl_5$, $TiCl_4$, $FeCl_3$, $SnCl_4$, $ZnCl_2$, $AsF_5$ und Halogen, wie z.B. Jod. Die Behandlung der erfindungsgemäßen Polymere mit Dotierungsmittel (n) wird im allgemeinen so durchgeführt, daß man die Dämpfe oder Lösungen des Dotierungsmittels auf die Polymeren einwirken läßt. Meist arbeitet man bei etwa 10 bis 30°C, meist unter Feuchtigkeitsausschluß, oft unter Luftausschluß. Die dotierten Polymere enthalten vorzugsweise von 0 bis 50, besonders vorzugsweise von 0,01 bis 30, insbesondere von 0,1 bis 20 Gew.-% Dotierungsmittel.

Die erfindungsgemäßen Polymere sind schwarze und in der Regel in gängigen Lösungsmitteln unlösliche Feststoffe. Bei Durchführung der Reaktion in Lösungsmittel fallen sie als Pulver an. Durch Aufbringen von Verbindung der Formel (III) und gegebenenfalls Kondensationsmittel, vorzugsweise in Abwesenheit von Lösungsmitteln, auf Oberflächen kann man Folien und Beschichtungen herstellen.

Die erfindungsgemäßen Polymere sind je nach Art und Umfang ihrer Dotierung und Quarternisierung elektrisch leitende oder halbleitende Verbindungen. Sie können beispielsweise in Batterien, Schaltungen, Schaltern, gegebenenfalls vermischt mit anderen Polymeren, eingesetzt werden.

Die erfindungsgemäßen Polymere können auch aufgrund ihrer komplexbildenden Eigenschaften (siehe nachfolgendes Beispiel Nr. 27) als Absorbentien für Schwermetalle und als Katalysatoren verwendet werden.

In den nachfolgenden Beispielen beziehen sich die Prozentzahlen auf das Gewicht, sofern nicht anders angegeben. Theoretische Analysenwerte und theoretische Ausbeute sind jeweils auf die entsprechenden Verbindungen der Formel (I) bezogen.

Beispiel 1

In 50 ml Thionylchlorid wurden portionsweise unter Rühren 5 g Pyrrol-2-carboxaldehyd eingetragen, dann 2 h unter Rückfluß erhitzt, 18 h bei Raumtemperatur stehengelassen, anschließend das überschüssige Thionylchlorid bei einem Druck von ca. 2 kPa (abs.) abdestilliert. Der schwarze, glänzende, spröde Rückstand wurde 4 h bei 250°C und 0,5 Pa (abs.), behandelt, danach unter Schutzgas in einer Labormühle gemahlen und anschließend nochmals 4 h bei 250°C und 0,5 Pa (abs.) behandelt.

Ausbeute und Analysendaten des Produktes sind aus den Tabellen 1 und 2 ersichtlich.

Beispiele 2 bis 11 und 17

Die in Tabelle 1 genannten Mengen von Verbindungen der Formel (III) wurden jeweils in 50 ml Trichlormethan gelöst. Diesen unter Rückfluß siedenden Lösungen wurden jeweils innerhalb einer halben Stunde die in Tabelle 1 genannten Mengen an Kondensationsmittel, jeweils gelöst in ebenfalls 50 ml Trichlormethan, tropfenweise zugegeben, die angegebene Reaktionszeit lang unter Rückfluß erhitzt. Dann wurde jeweils auf Raumtemperatur abgekühlt, filtriert, mit wasserfreiem Trichlormethan gewaschen und die Produkte bei 100°C und 0,5 Pa (abs.) getrocknet.

Ausbeuten und Analysendaten sind aus den Tabellen 1 und 2 ersichtlich.

Tabelle 1: Umsetzung von Pyrrolen der Formel (III)

| Beispiel Nr. | Kondensations-mittel | Y | Z | 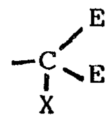 | W | Menge(g) | Reakt.-zeit (h) | Molverh[a)]. | Ausbeute (g) | Ausbeute (%)[b)] |
|---|---|---|---|---|---|---|---|---|---|---|
| 1 | $SOCl_2$ | H | H | 2-CHO | H | 5 | 2 | 13 | 6,7 | 92 |
| 2 | $SOCl_2$ | H | H | 2-CHO | H | 10 | 3 | 1 | 9,8 | 91 |
| 3 | Tosylchlorid | H | H | 2-CHO | H | 10 | 25 | 1 | 8,8 | 58 |
| 4 | Toluolsulfons. | H | H | 2-CHO | H | 10 | 14 | katal.(1g) | 5,0 | 39 |
| 5 | $POCl_3$ | H | H | 2-CHO | H | 10 | 9 | 0,3 | 11,7 | 77 |
| 6 | $POCl_3$ | H | H | 2-CHO | H | 10 | 13 | 1 | 15,1 | 97 |
| 7 | $(CF_3SO_2)_2$ | H | H | 2-CHO | H | 5 | 5 | 1 | 9,0 | 86 |
| 8 | $SOCl_2$ | H | H | $2-COCH_3$ | H | 5 | 3,5 | 1 | 1,95 | 26 |
| 9 | $POCl_3$ | H | H | $2-COCH_3$ | H | 5 | 11,5 | 0,33 | 3,55 | 47 |
| 10 | $POCl_3$ | H | H | $2-COCH_3$ | H | 10 | 16 | 1 | 19,4 | 93 |
| 11 | $POCl_3$ | $2-CH_3$ | $4-CH_3$ | $3-COCH_3$ | H | 5 | 6 | 1 | 7,53 | 92 |
| 12 | $POCl_3$ | H | H | $2-COC_6H_5$ | H | 10 | 23 | 1 | 7,46 | 42 |
| | | | | | | | | | 6,9 | 43 lösl. Anteil |

Fortsetzung

Tabelle 1: Umsetzung von Pyrrolen der Formel (III)

| Beispiel Nr. | Kondensationsmittel | Y | Z | 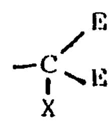 | W | Menge(g) | Reakt.-zeit (h) | Molverh[a)]. | Ausbeute (g) | Ausbeute (%)[b)] |
|---|---|---|---|---|---|---|---|---|---|---|
| 13 | $POCl_3$ | H | H | $3-COC_6H_5$ | H | 1,74 | 17,5 | 26,8 | 2,8 | 100 |
| 14 | $(CF_3SO_2)_2O$ | H | H | $2-COC_6H_5$ | H | 5 | 18 | 1 | 4,5 | 78 |
| 15 | $POCl_3$ | $2-CH_3$ | $3-COOC_2H_5$ | 5-CHO | H | 10 | 2,5 | 9,8 | 12,84 | 98 |
| 16 | $POCl_3$ | H | H | 2-CHO | $CH_3$ | 8,0 | 3 | 1 | 14,2 | |
| 17 | $POCl_3$ | H | H | 2-CHO | $n-C_4H_9$ | 8,0 | 34 | 1 | 10,0 | 94 |
| 18 | $POCl_3$ | H | H | 2-CHO | $n-C_{10}H_{21}$ | 8,95 | 13,5 | 1 | 9,8 | 97 |
| 19 | $POCl_3$ | H | H | 2-CHO | $C_6H_5$ | 8,0 | 7 | 1 | 10,0 | 100 |

a) Molverhältnis Kondensationsmittel/ Verbindung der Formel (III)

b) Ausbeute über den Stickstoffgehalt ermittelt

Tabelle 2

Elementaranalysen der neuen Polymeren

| Beisp. Nr. | Elementaranalyse (%) C | H | Cl | N | O | S | P | F |
|---|---|---|---|---|---|---|---|---|
| 1 | 39,97 | 0,91 | 32,59 | 9,19 | 8,92 | 8,40 | - | - |
| 2 | 55,70 | 4,17 | 10,72 | 13,00 | 14,45 | 1,94 | - | - |
| 3 | 59,27 | 4,66 | 0,95 | 9,22 | 18,26 | 7,61 | - | - |
| 4 | 59,26 | 4,65 | - | 11,15 | 19,10 | 5,81 | - | - |
| 5 | 42,77 | 3,58 | 13,55 | 9,64 | 21,98 | - | 8,45 | - |
| 6 | 39,71 | 3,22 | 12,71 | 9,29 | 24,38 | - | 10,66 | - |
| 7 | 34,2 | 2,5 | - | 7,0 | 26,15 | 10,85 | - | 19,3 |
| 8 | 42,61 | 2,44 | 21,60 | 8,40 | 7,42 | 17,49 | - | - |
| 9 | 43,87 | 4,59 | 9,79 | 8,67 | 22,95 | - | 10,10 | - |
| 10 | 35,40 | 3,81 | 18,21 | 6,59 | 24,90 | - | 11,05 | - |
| 11 | 44,89 | 5,11 | 16,80 | 6,30 | - | - | 9,52 | - |
| 17 | 52,5. | 6,1 | 5,60 | 7,0 | 17,5 | - | 11,3 | - |

Beispiel 12:

10 g (58,4 mmol) 2-Benzoylpyrrol wurden in 50 ml wasserfreiem Chloroform gelöst und dazu unter Kochen am Rückfluß innerhalb von 30 min. 5,36 ml (58,4 mmol) Phosphoroxychlorid in 50 ml Chloroform zugetropft. Nach 2 1/2-stündigem Kochen wurde 1 ml Trifluormethansulfonsäure zugesetzt, wonach nochmals 20 Stunden unter Rückfluß erhitzt worden war. Die ausgefallene Festsubstanz wurde abgesaugt, mit 50 ml wasserfreiem Chloroform nachgewaschen, 2 Stunden an der Luft getrocknet, dann 2 Stunden bei 19 hPa und 100°C und danach noch 2 Stunden bei 0,5 Pa und 100°C endgetrocknet.
Ausbeute Fraktion 1: 7,45 g = 42 % d.Th. (berechnet aus dem Stickstoffgehalt), schwarzes unlösliches Pulver.
Analyse: C: 47,20 %; H: 3,60 %; Cl: 8,81 %; N: 4,60 %; P: 12,85 %
Aus der abgesaugten Chloroformlösung, die mit der Waschflüssigkeit vereinigt worden war, wurden nach Eindampfen bei 19 hPa und 2-stündigem Trocknen bei 0,5 Pa und 100°C weitere 6,9 g einer schwarzen Festsubstanz isoliert.
Ausbeute = 43 % d.Th. berechnet auf den Stickstoffgehalt
Analyse: C: 41,3 %; H: 3,8 %; Cl: 10,2 %; N: 5,1 %; P: 7,2 %

Beispiel 13:

1,74 g 3-Benzoylpyrrol (10,16 mmol), in 25 ml wasserfreiem Chloroform gelöst, werden unter Kochen am Rückfluß zu 25 ml Phosphoroxychlorid innerhalb 15 Minuten zugetropft. Das Gemisch wurde 17,5 Stunden unter Rückfluß erhitzt (Sumpftemperatur 78°C). Nach Abdampfen des Lösungsmittels und des überschüssigen Phosphoroxychlorids bei vermindertem Druck bei 100°C wurde der schwarze Rückstand 9 Stunden bei 0,5 Pa und weitere 4 Stunden bei 2 mPa getrocknet.
Ausbeute = 2,8 g = 99 % d.Th. berechnet auf den Stickstoffgehalt.
Analyse: C: 41,1 %; H: 3,0 %; Cl: 18,6 %; N: 5,1 %; O: 12,4%; P: 11,8 %

Beispiel 14:

5 g 2-Benzoylpyrrol (29,2 mmol) wurden in 25 ml wasserfreiem Chloroform gelöst und unter Kochen am Rückfluß wurden 8,24 g (29,2 mmol) Trifluormethansulfonsäureanhydrid in 25 ml Chloroform zugetropft. Nach 10-stündigem Kochen unter Rückfluß wurde das Chloroform bei 2 kPa (abs.) abdestilliert und die zurückgebliebene zähflüssige Masse in 200 ml Methanol gelöst und danach mit 750 ml Wasser gefällt. Der Niederschlag wurde abgesaugt, mit Wasser neutral gewaschen und 40 Stunden im Exsikkator uber $CaCl_2$ getrocknet. Der schwarz-braune Rückstand wurde danach 10 Stunden bei 2 mPa getrocknet, wobei noch ca. 100 mg unumgesetztes 2-Benzoylpyrrol absublimierten.
Ausbeute: 4,5 g = 78 % d.Th., berechnet auf den Stickstoffgehalt.
Analyse: C: 63,0 %; H: 4,3 %; N: 7,1 %; O: 13,2 %; F: 7,1 %; S: 4,9 %.

Beispiel 15:

10 g 2-Methyl-3-carboxyethyl-5-formylpyrrol (55,2 mmol), in 100 ml wasserfreiem Chloroform gelöst, wurden unter Rühren zu 50 ml auf 90°C im Wasserbad vorgeheiztem $POCl_3$ zugetropft und danach 1,5 Stunden unter Rückfluß erhitzt. Nach Stehen über Nacht wurde die Hauptmenge des Lösungsmittels abdestilliert, bis die Sumpftemperatur 90°C erreicht hatte. Bei dieser Temperatur wurde eine weitere Stunde gerührt und danach das überschüssige $POCl_3$ im Wasserstrahlvakuum abdestilliert. Der schwarze feste Rückstand wurde 8 Stunden bei 100°C und $5 \times 10^{-3}$ mbar ausgeheizt.
Ausbeute: 12,84 g = 98 % d.Th. berechnet auf den Stickstoffgehalt.
Analyse: C: 41,3 %; H: 4,2 %; Cl: 7,2 %; N: 5,9 %; O: 32,4 %; P: 6,5 %

Beispiel 16:

8,0 g (73,3 mmol) N-Methylpyrrol-2-carboxaldehyd wurde in 50 ml wasserfreiem Chloroform gelöst und dann unter Kochen am Rückfluß innerhalb von 50 Minuten 11,2 g (73,3 mmol) Phosphoroxychlorid in 50 ml Chloroform zugetropft. Die Mischung wurde 3 Stunden unter Rückfluß gekocht, anschließend auf Raumtemperatur abgekühlt und über Nacht stehengelassen. Die ausgefallene Festsubstanz wurde unter Argon über eine Schlenk-Fritte abgesaugt und mit 150 ml Chloroform ausgewaschen, 2 Stunden bei 0,5 Pa und danach 4 Stunden bei 2 mPa und 100°C getrocknet.
Das Produkt wurde unter Stickstoff vermahlen.
Ausbeute: 12,24 g schwarzes, unlösliches Polymer
Analyse: C: 43,83 %; H: 3,57 %; Cl: 18,1 %; N: 8,17 %; O: 15,03 %; P: 13,1 %

Beispiel 18:

8,95 g (38 mmol) N-Decylpyrrol-2-carboxaldehyd wurde in 50 ml wasserfreiem Chloroform gelöst und dann unter Kochen am Rückfluß innerhalb von 30 Minuten 5,83 g (38 mmol) Phosphoroxychlorid in 50 ml Chloroform zugetropft. Die Mischung wurde 13,5 Stunden unter Rückfluß gekocht, anschließend auf Raumtemperatur abgekühlt und über Nacht stehengelassen. Das Lösungsmittel wurde danach im Vakuum

abgedampft und 4 Stunden bei 0,5 Pa und nach dem Vermahlen unter Stickstoff weitere 4 Stunden bei 2 mPa und 100°C endgetrocknet.
Ausbeute: 9,8 g = 97 % d.Th. (berechnet aus dem Stickstoffgehalt)
Analyse: C: 66,80 % H: 7,95 % Cl: 3,8 % N: 5,25 % O: 8,4 % P: 7,8 %

Beispiel 19:

8,0 g (46,7 mmol) N-Phenylpyrrol-2-carboxaldehyd wurde in 50 ml wasserfreiem Chloroform gelöst und dazu unter Kochen am Rückfluß innerhalb von 60 Minuten 7,2 g (46,7 mmol) Phosphoroxychlorid in 50 ml Chloroform zugetropft. Die Mischung wurde 7 Stunden unter Rückfluß gekocht, anschließend auf Raumtemperatur abgekühlt und über Nacht stehengelassen. Das Lösungsmittel wurde bei 1 hPa abgezogen und der Rückstand im Wasserbad von 100°C 3 Stunden getrocknet. Nach dem Vermahlen des Produktes unter Stickstoff wurde 4 Stunden bei 100°C und 2 mPa getrocknet.
Ausbeute: 10,0 g = 100 % d.Th. (berechnet aus dem Stickstoffgehalt) schwarzes, unlösliches Polymer
Analyse: C: 57,56 % H: 4,2 % Cl: 3,54 % N: 6,5 % O: 18,0 % P: 10,1 %

Beispiel 20:

Herstellung eines Überzuges auf Graphit

Auf einer runden Graphitscheibe mit 7,6 cm Durchmesser wurden 500 mg 2-Pyrrolcarboxaldehyd aufgeschmolzen und gleichmäßig verteilt. Die Scheibe wurde dann auf eine auf 80°C vorgewärmte, gelochte Porzellanplatte in einem Exsikkator überführt, in dem eine Petrischale mit 20 ml $POCl_3$ unter dem Prozellaneinsatz eingestellt war. Nach 1 Stunde hatte sich auf der Graphitscheibe ein schwarzer, grünlich - schillernder Überzug gebildet, der sich beim Tempern über 18 Stunden bei 100°C nicht mehr veränderte.

Beispiel 21:

Auf eine polierte Siliciumscheibe mit 7,6 cm Durchmesser, die auf 60°C aufgeheizt worden war, wurde eine Lösung von 22 mg 2-Pyrrolaldehyd in Äther ausgegossen. Nach dem Verdampfen des Äthers wurde die Scheibe analog Beispiel 20 $POCl_3$-Dämpfen ausgesetzt. Danach wurde sie in einer Petrischale über Nacht unter 50 ml Chloroform aufbewahrt, wobei sich die Folie von der Siliciumschicht ablöste. Die abgelöste Folie wurde zwei Tage an der Luft zwischen Filterpapier getrocknet. Man erhielt eine schwarzgrünlich schimmernde, glatte Folie. Die Leitfähigkeit, nach der Zweipunktmethode gemessen, ergab $2 \times 10^{-4}$ S/cm.

Beispiel 22:

Analog Beispiel 20 wurden 22 mg 2-Acetylpyrrol bei 100°C auf einer Siliciumscheibe aufgeschmolzen, die dann in einem Exsikkator, der im Trockenschrank auf 100°C vorgewärmt worden war, $POCl_3$-Dämpfen ausgesetzt wurde. Nach 1 Stunde hatte sich auf der Siliciumscheibe eine glänzende schwarze Folie gebildet.

Beispiel 23:

In eine Petrischale mit einem plan geschliffenen oberen Rand, Durchmesser 9 cm und Höhe 2 cm wurden 5 ml rauchende Schwefelsäure (65 % $SO_3$) eingebracht. In die Petrischale wurden zwei Glasstäbe mit 1 cm Durchmesser als Abstandhalter eingelegt und darauf eine Siliciumscheibe, die analog Beispiel 21 mit 46 mg 2-Pyrrolcarboxaldehyd in 1 ml Äther beschichtet worden war, gelegt. Die Petrischale wurde abgedeckt 12 Stunden bei Raumtemperatur stehengelassen, wobei sich ein schwar zer Überzug bildete. Die Siliciumscheibe wurde danach 2 × 4 Stunden in je 25 ml Chloroform eingelegt und getrocknet. Man erhielt einen schwarzen, grünlich schimmernden Überzug, der sich leicht von der Oberfläche lösen ließ.

Beispiel 24:

Extraktion mit Wasser zur Entfernung des Kondensationsmittels und von dessen Reaktionsprodukten. 4 g des nach Beispiel 6 hergestellten Pulvers wurden 3 × mit je 70 ml Wasser ausgerührt und wieder abgesaugt. Der Filterrückstand wurde danach 2 Stunden bei 100°C und 0,5 Pa getrocknet.
Ausbeute 2,98 g;
Analyse: C: 47,7; H: 4,1; Cl: 0,5; N: 11,3; O: 27,6; p: 9,5.

Beispiel 25:

Extraktion mit wässrigem $NH_3$ zur Entfernung des Kondensationsmittels und von dessen Reaktionsprodukten
5 g des nach Beispiel 6 hergestellten Pulvers wurden bei Raumtemperatur dreimal mit je 25 ml 10-%igem wäßrigem Ammoniak je eine Stunde ausgerührt und abgesaugt. Nach dem letzten Absaugen wurde mit Wasser neutral gewaschen. Der Filterrückstand ergab nach 4-stündigem Trocknen bei 100°C und 0,5 Pa 3,0 g eines schwarzen Pulvers.
Analyse: C: 60,12 %; H: 4,64 %; N: 16,88 %; O: 16,0 %; P: 1,97 %; Cl: 0,3 %.

Beispiel 26:

2 g des nach Beispiel 6 hergestellten Pulvers wurden zweimal je 24 Stunden mit 30 g Kaliumjodid in 100 ml Wasser angerührt, abgesaugt und am Schluß mit 100 ml Wasser nachgewaschen. Das schwarze Pulver wurde 2 Stunden im Wasserstrahlvakuum bei 100°C endgetrocknet.
Ausbeute: 1,6 g
Analyse: C: 49,4 %; H: 3,6%; J: 23,7 %; N: 11,2 %; O: 11,4 %; P: 0,6 %.

Beispiel 27:

2 g des nach Beispiel 6 hergestellten Pulvers wurden 15 min. mit 15 ml 10 % wäßrigem Ammoniak bei Raumtemperatur gerührt. Danach wurde eine Lösung von 842 mg Kupfersulfat ($CuSO_4 \times 5H_2O$) in 10 ml Wasser zugesetzt und 3 Tage bei Raumtemperatur gerührt, abgesaugt, mit Wasser gewaschen und 2 Stunden bei 0,5 Pa getrocknet.
Ausbeute: 1,35 g
Analyse: C: 57,2 %; H: 3,6 %; N: 15,9 %; O: 12,9 %; Cu: 10,3 %.

Beispiel 28:

Dotierung und Leitfähigkeitsmessungen an Pulver

Die Dotierung mit Jod wurde in einem Schlenkrohr in der Gasphase vorgenommen, wobei 500 mg der Proben mit 150 mg Jod vermischt, mit flüssigem Stickstoff abgekühlt und auf 0,5 Pa evakuiert wurden. Die Schlenkrohr wurden anschließend mindestens 4 Stunden im Trockenschrank bei 100°C, bis im Gasraum die Jodfarbe verschwunden war, aufbewahrt. Die Leitfähigkeit der Pulver wurde nach der 4-Punkt-Methode für Leitfähigkeiten $\leq 10^{-10}$ und nach der 2-Punkt-Methode für Leitfähigkeiten $> 10^{-10}$ unter einem Druck von 100 MPa bei Raumtemperatur gemessen. Tabelle 3 zeigt die erzielten Leitfähigkeiten.

Tabelle 3

Pulverleitfähigkeit

| Subst. aus Beisp. Nr. | Leitfähigkeit (S/cm) undotiert | 0,3 g Jod/g Polymer |
|---|---|---|
| 1 | $7,4 \times 10^{-7}$ | $6.8 \times 10^{-8}$ |
| 2 | $1,4 \times 10^{-6}$ | $5,1 \times 10^{-6}$ |
| 3 | $1,2 \times 10^{-8}$ | $2,8 \times 10^{-8}$ |
| 4 | $3,9 \times 10^{-9}$ | $1,1 \times 10^{-8}$ |
| 5 | $4,9 \times 10^{-8}$ | - |
| 6 | $4,7 \times 10^{-7}$ | $9,3 \times 10^{-6}$ |
| 13 | $< 10^{-12}$ | - |
| 24 | $2,8 \times 10^{-4}$ | - |
| 25 | $1,0 \times 10^{-10}$ | $4,4 \times 10^{-8}$ |
| 26 | $8,6 \times 10^{-9}$ | - |

Beschreibung der Abbildungen:

Fig. 1: CP-MAS-$^{13}C$-NMR (Festkörper-"Magic Angle Spinning "-NMR) einer gemäß Beispiel 6 hergestellten Probe.
Das einzige Signal bei c.a. 130 ppm deutet darauf hin, daß praktisch ausschließlich $sp_2$-hybridisierte Kohlenstoffatome im Polymer vorliegen.

Fig. 2: CP-MAS-$^{13}C$-NMR einer gemäß Beispiel 17 hergestellten Probe.
Neben dem Signal der $sp_2$-hybridisierten Kohlenstoffatome tauchen die Signale der $sp_3$-Kohlenstoffatome der N-gebundenen n-Butylgruppe auf.

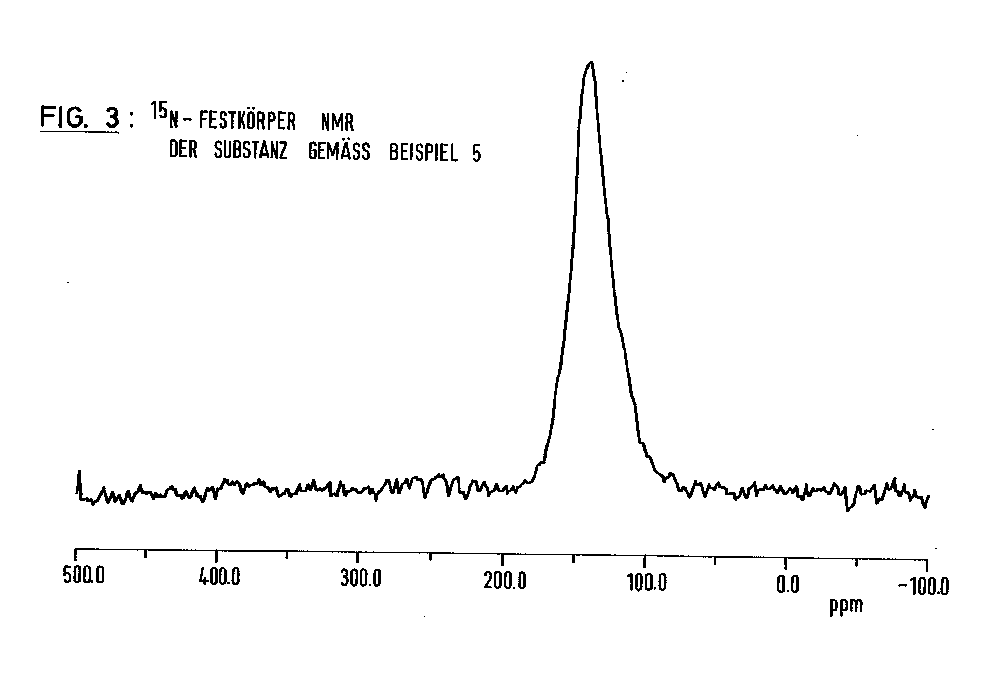

Fig. 3: CP-MAS-$^{15}N$-NMR eines gemäß Beispiel 5, aber mit $^{15}N$-markierten Pyrrol-2-carboxaldehyd hergestellten Polymer.
Das einzige Signal bei c.a. 145 ppm deutet darauf hin, daß die Stickstoffatome praktisch vollständig protoniert sind.

**Ansprüche**

1. Polymere mit konjugierten Doppelbindungen, aufgebaut aus gegebenenfalls ringsubstituierten heterocyclischen Fünfringen mit jeweils einem Stickstoffatom als einzigem Heteroatom im Ring,
dadurch gekennzeichnet, daß die Fünfringe jeweils paarweise über ein gegebenenfalls substituiertes Kohlenstoffatom als Brückenglied miteinander verbunden sind, die Polymere mindestens fünf dieser Fünfringe und von 0 bis 50 %, bezogen auf das Gewicht dieser Polymere, Dotierungsmittel enthalten und/oder elektrochemisch dotiert sind.

2. Polymere nach Anspruch 1,
dadurch gekennzeichnet, daß sie Einheiten der Formel (I) enthalten

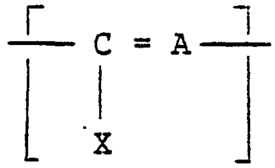

(I),

worin die Reste
C Kohlenstoffatome und die Reste
A gleiche oder verschiedene Reste der Formel (II) sind:

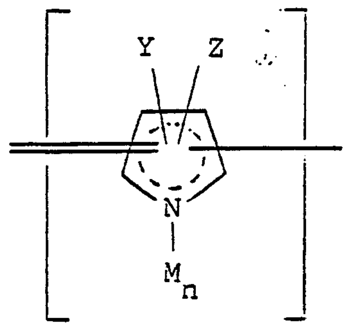

(II),

wobei in den obigen Formeln (I) und (II)

X, Y und Z unabhängig voneinander gleiche oder verschiedene einwertige Reste bedeuten, nämlich Wasserstoffatome, $C_1$-bis $C_{18}$-Alkylreste oder gegebenenfalls durch Halogen, Nitro-, $C_1$-bis $C_4$-Alkyl-und/oder Phenylreste substituierte Phenylreste und

Y und Z, welche, wie aus Formel (II) ersichtlich, jeweils an die nicht durch Gruppen der Formel C-X substituierten Kohlenstoffatome des Heterocyclus gebunden sind, können zusätzlich zu den obengenannten Bedeutungen auch noch solche der Formel -COOR haben, worin R für ein Wasserstoffatom, eine Phenyl- oder $C_1$-bis $C_{18}$-Alkylgruppe steht,

M steht jeweils für Wasserstoff, ein Metallatom, Metallion, einen Metallkomplex, eine Lewis-Säure, einen $C_1$-bis $C_{18}$-Alkylrest oder einen Phenylrest;

n steht für die Zahl 0 oder 1, mit der Maßgabe, daß wenn
n 0 bedeutet, die entsprechende Einheit der Formel (I) ungeladen ist und wenn
n 1 bedeutet, diese Einheit eine positive Ladung trägt,
und der gestrichelte Kreis innerhalb des Fünfrings in Formel (II) für zwei bindende Pi-Elektronenpaare im Heterocyclus steht.

3. Verfahren zur Herstellung der Polymere gemäß Anspruch 1 oder 2, dadurch gekennzeichnet, daß man Verbindungen der Formel

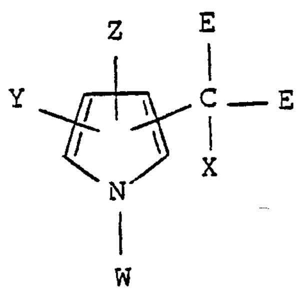

(III),

worin X, Y und Z die in Anspruch 2 angegebenen Bedeutungen haben und der Rest der Formel $-CXE_2$ in 2, 3, 4 oder 5-Position am Pyrrolring sitzt,

W ein Wasserstoffatom, einen $C_1$-bis $C_{18}$-Alkylrest oder einen Phenylrest bedeutet

E gleiche oder verschiedene einwertige Reste, nämlich Halogenatome, insbesondere Chlor-oder Bromatome, $C_1$-bis $C_6$-Alkoxyreste, $C_1$-bis $C_8$-Alkylsulfonat-oder Arylsulfonatreste bedeuten oder beide Reste E für das Sauerstoffatom einer Carbonylgruppe stehen, ggf. in Gegenwart eines Kondensationsmittels umsetzt, und, falls gewünscht, gegebenenfalls verwendetes Kondensationsmittel vorzugsweise destillativ

entfernt, und, falls das gewünschte Polymer Einheiten der Formel (II) enthalten soll, wobei n den Wert 1 besitzt und der gewünschte Reste M nicht schon durch das gegebenenfalls verwendete Kondensationsmittel eingeführt wurde,
Reste von gegebenenfalls verwendetem Kondensationsmittel und dessen Reaktionsprodukten durch Behandeln mit einem polaren Lösungsmittel und gegebenenfalls einer Base entfernt, und das so erhaltene Polymer mit Brönstedt-oder Lewis-Säuren, Metallen, Metallionen, Metallkomplexen und/oder $C_1$-bis $C_{18}$-Alkylierungs-und/oder Phenylierungsmitteln umsetzt.

4. Verwendung der Polymere gemäß Anspruch 1 oder 2 oder der gemäß dem Verfahren nach Anspruch 3 herstellbaren Polymere als elektrische Leiter und Halbleiter, als Absorbentien für Schwermetalle und/oder als Katalysatoren.

FIG. 1 : $^{13}C$ - FESTKÖRPER NMR
DER SUBSTANZ GEMÄSS BEISPIEL 6

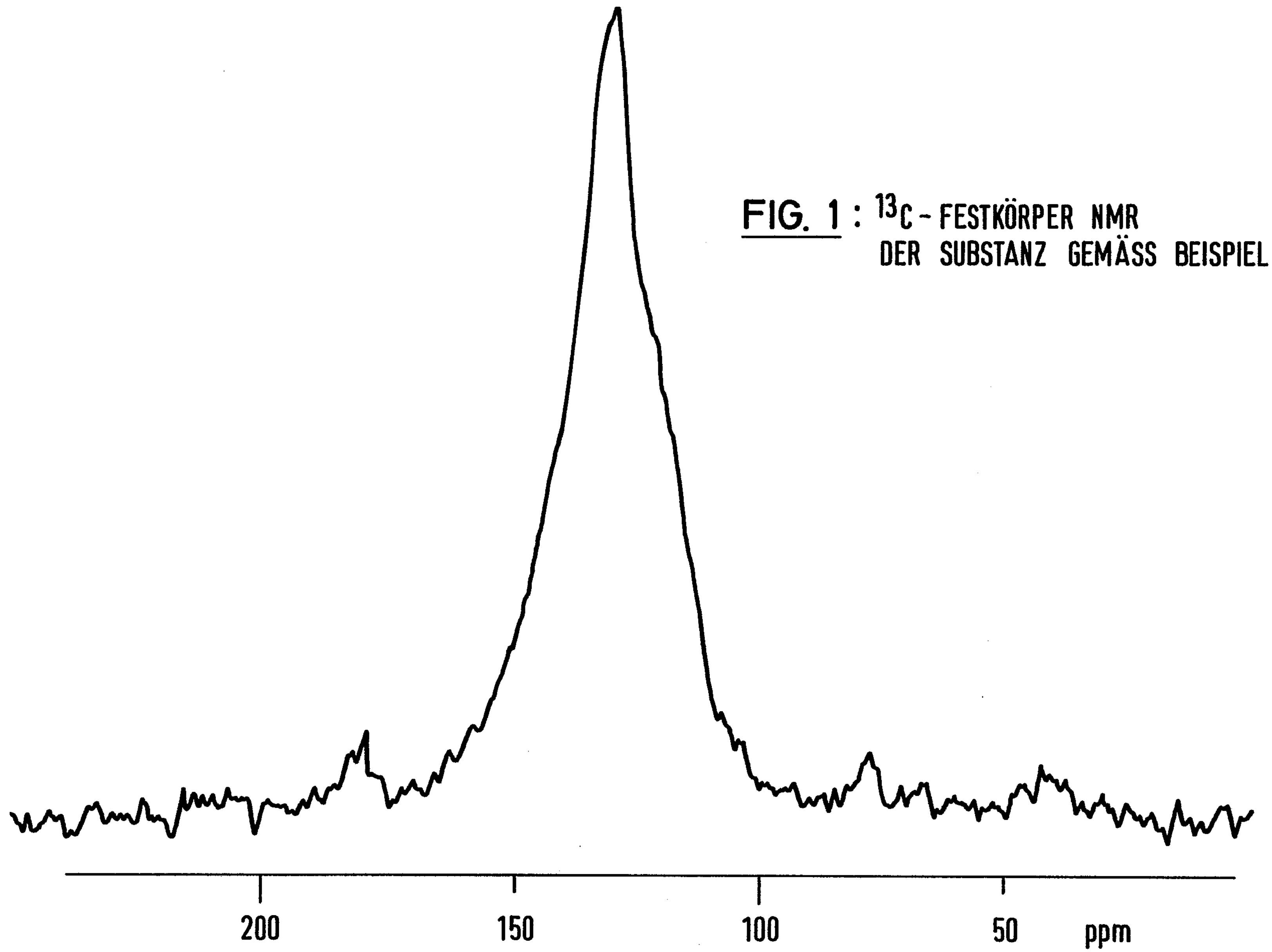

FIG. 2: $^{13}C$ - FESTKÖRPER NMR
DER SUBSTANZ GEMÄSS BEISPIEL 17

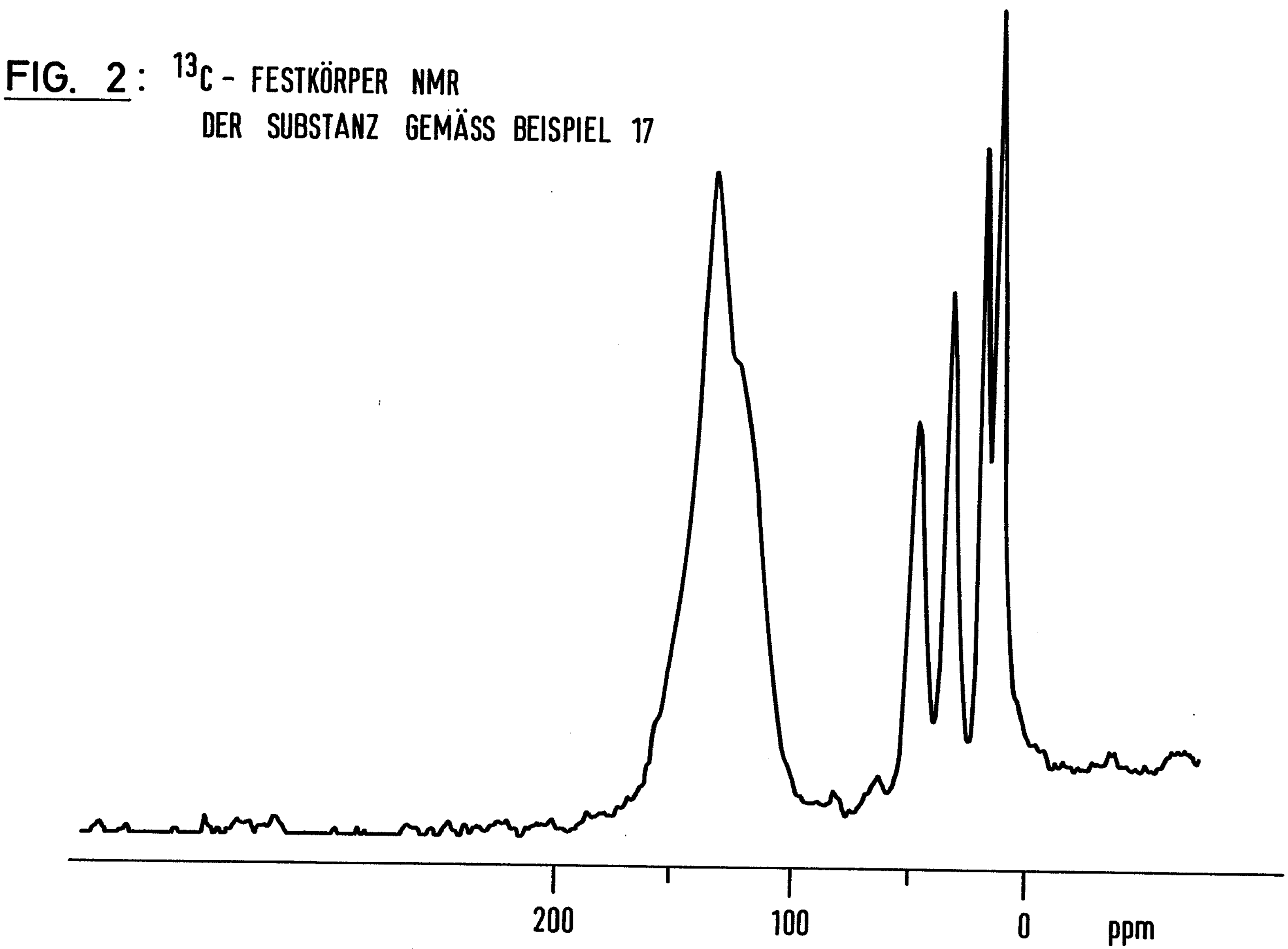

FIG. 3 : $^{15}N$ - FESTKÖRPER NMR
OER SUBSTANZ GEMÄSS BEISPIEL 5